# EUROPÄISCHE PATENTSCHRIFT

(11) **EP 3 444 519 B1**
(45) Veröffentlichungstag und Bekanntmachung des Hinweises auf die Patenterteilung: **11.12.2019**
(21) Anmeldenummer: 18181830.3
(22) Anmeldetag: 05.07.2018
(51) Int. Cl.: F16P 3/14, G01V 8/20

(54) **LICHTGITTER**
LIGHT GRID
GRILLE LUMINEUSE

(30) Priorität: 20.07.2017 DE 102017116396
(43) Veröffentlichungstag der Anmeldung: 20.02.2019
(73) Patentinhaber: Sick AG, 79183 Waldkirch (DE)
(72) Erfinder: Leins, Stephan, 72461 Albstadt (DE)

(56) Entgegenhaltungen:
- DE-B3-102014 102 837
- DE-U1-202006 014 304
- US-A1- 2002 047 633

## Beschreibung

Die vorliegende Erfindung betrifft ein Lichtgitter nach dem Oberbegriff von Anspruch 1.

Soll an Maschinen mit einem Lichtgitter als Schutzbereichsabsicherung häufig Material eingelegt und/oder entnommen werden oder es werden Einzelschritte der Montage von Hand ausgeführt, wird ein Lichtgitter, meist mit einer Auflösung von 14 mm in Abhängigkeit eines errechneten oder gemessenen Mindestabstandes möglichst nah an der Gefahrstelle montiert. Um ein Hintertreten der Gefahrstelle zu verhindern, wird nach dem Stand der Technik meist ein zusätzliches Lichtgitter als Hintertretschutz angeordnet. meist in einer horizontalen Richtung, wobei das Lichtgitter zur Primärabsicherung vertikal angeordnet ist.

Oftmals ist es jedoch nicht möglich, beispielsweise aufgrund der Geometrie des Maschinenkorpus oder der ergonomischen Anforderung, die Maschine so auszuführen, dass ein weiteres Hintertreten, Besteigen, Einsteigen, Hineinkriechen usw. komplett ausgeschlossen werden kann. Dann wird aus der oben beschriebenen Gefahrstellenabsicherung eine Zugangsabsicherung.

Diese Punkte führen oft zu einer unklaren Situation, denn die Beurteilung eines möglichen Hintertretens ist nicht immer ganz einfach.

Solange jedoch nicht eindeutig eine ständige Erkennung von gefährdeten Personen im Gefahrbereich möglich ist, muss dem Reset-/Restartverhalten der Maschine große Beachtung geschenkt werden.

Wenn eine Schutzeinrichtung, beispielsweise ein Lichtgitter, einen Stopp-Befehl gegeben hat, dann muss der Stopp-Zustand aufrecht erhalten werden, bis eine manuelle Rücksetzeinrichtung betätigt wird (Reset-Funktion) und die Maschine in einem weiteren Schritt neu gestartet werden kann (Restart-Funktion). Eine Ausnahme hierzu ist die Verwendung von Schutzreinrichtungen, die eine ständige Erkennung von gefährdeten Personen im Gefahrbereich ermöglichen (z. B. Hintertretschutz-Funktion).

Die manuelle Rücksetzfunktion muss durch ein getrenntes, manuell zu bedienendes Gerät bereitgestellt werden. Das Betätigungselement zum Rücksetzen muss an einer sicheren Position außerhalb des Gefahrenbereichs angebracht werden. Von dieser Position aus muss der Gefahrenbereich vollständig einsehbar sein. Somit kann überprüft werden, dass sich keine Person im Gefahrenbereich aufhält. Das Signal der Rücksetzeinrichtung ist Bestandteil der Sicherheitsfunktion.

Dadurch muss ein Bediener beispielsweise ggf. erst Teile ablegen, um dann von Hand ein oder mehrere Befehlsgeräte z. B. einen Reset-Taster zu betätigen.

Die DE 20 2006 014 304 U1 offenbart beispielsweise ein Lichtgitter zum Überwachen eines Schutzfeldes, wobei im gleichen Gehäuse Bereiche unterschiedlicher optischer Auflösung vorhanden sind.

Die DE 10 2014 102 837 B3 offenbart eine Vorrichtung zur Werkzeugkontrolle mit einem Bearbeitungsbereich für Werkstücke, einem Werkzeugmagazin für Werkzeuge und einem bewegbaren Werkzeughalter, der zwischen dem Werkzeugmagazin und dem Bearbeitungsbereich bewegbar ist, wobei zwischen dem Bearbeitungsbereich und dem Werkzeugmagazin ein Lichtgitter zur Kontrolle des Werkzeuges angeordnet ist, wobei zwischen einem ersten Lichtgittergehäuse und einem zweiten Lichtgittergehäuse des Lichtgitters Lichtachsen gebildet sind, wobei die Lichtachsen durch eine Steuer- und Auswerteeinheit einzeln aktivierbar sind und wobei die Anzahl und/oder Position der Lichtachsen zur zeitoptimierten Auswertung des Werkzeuges einstellbar ist, wobei die Anzahl und/oder Position der Lichtachsen zur Auswertung des Werkzeuges abhängig von Werkzeugkenndaten durch die Steuer- und Auswerteeinheit automatisch eingestellt ist.

Nachteilig beim dem genannten Stand der Technik ist jedoch, dass die Bereiche unterschiedlicher optischer Auflösung bereits durch die Herstellung festgelegt sind und für jeden speziellen Anwendungsfall ein neues angepasstes Lichtgitter hergestellt werden muss.

Eine Aufgabe der Erfindung besteht darin, ein verbessertes Lichtgitter bereitzustellen, welches vielseitiger einsetzbar ist. Eine weitere Aufgabe besteht darin, eine Sicherheit an Maschinen durch ein verbessertes Lichtgitter zu erhöhen. Eine weitere Aufgabe der Erfindung besteht darin, eine höhere Produktivität zu ermöglichen bei einer Bedienung einer Maschine.

Die Aufgabe wird gemäß Anspruch 1 gelöst durch ein Lichtgitter zur Erfassung von Objekten und/oder Personen innerhalb eines Überwachungsbereiches oder Schutzfeldes, mit einer Sendeeinheit mit Lichtstrahlen emittierenden Lichtsendern, mit einer Empfangseinheit mit Lichtstrahlen empfangenden Lichtempfängern, und mit einer Steuer- und Auswerteeinheit, in welcher in Abhängigkeit von Empfangssignalen an den Ausgängen von Lichtempfängern Objektfeststellungssignale generiert werden, wobei die Lichtsender und die Lichtempfänger jeweils äquidistant angeordnet sind, wobei die Lichtsender und Lichtempfänger eine erste Auflösung des Lichtgitters bilden, wobei die erste Auflösung in einem ersten Bereich des Lichtgitters wirksam ist und die Lichtsender und Lichtempfänger in einem zweiten Bereich des Lichtgitters mit einer zweiten Auflösung durch die Steuer- und Auswerteeinheit einstellbar sind, wobei die zweite Auflösung eine niedrigere Auflösung ist, als die erste Auflösung.

Damit wird ein Lichtgitter bzw. Lichtvorhang gebildet mit zwei unterschiedlichen Auflösungen, wobei ein zeitgleiches Überwachen von zwei unterschiedlichen Auflösungen in einem Lichtgitter erfolgt.

Damit erfolgt erfindungsgemäß durch das Lichtgitter eine Unterscheidung zwischen einem 'Eingriff', nämlich ob nur Körperteile in das Schutzfeld eingreifen und einem ,Zugang', bei dem ein ganzer Körper in das Schutzfeld des Lichtgitters hineinragt. Diese Unterscheidung wird erfindungsgemäß durch ein und dasselbe Lichtgitter durchgeführt.

Damit kann das Wiederanlaufverhalten der Maschine optimiert werden und ggf. auf einen Quittierungsvorgang verzichtet werden. Dies führt zu einer deutlichen Steigerung der Produktivität der Anlage bzw. Maschine.

Jeder der Bereiche wird durch eine bestimmte Anzahl von aufeinanderfolgenden Lichtsendern bzw. Lichtempfängern als aufeinanderfolgende Sender-/Empfängerpaare gebildet.

Das Objektfeststellungssignal wird über Ausgangsschaltelemente ausgegeben. Die Ausgangsschaltelemente werden üblicherweise mit einer Maschinensteuerung verbunden. Aus Sicherheitsgründen sind die Ausgangsschaltelemente redundant vorhanden, so dass zwei Ausgangsschaltelemente als Paar vorgesehen sind. Sobald nur ein Ausgangsschaltelement abschaltet, also beispielsweise von einem High-Pegel, beispielsweise 24 Volt auf einen Low-Pegel, beispielsweise Null-Volt schaltet, wird eine angeschlossene Maschine abgeschaltet. Das Ausgangsschaltelement wird auch als OSSD bezeichnet, wobei OSSD für 'Output Signal Switching Device' steht.

Die zweite Auflösung ist dabei nicht durch fixierte Lichtstrahlen festgelegt, sondern es handelt sich um eine bewegliche Auflösung, die an allen Stellen des Lichtvorhangs die erforderliche Auflösung aufweist. Bei einer 'feststehenden' Auflösung würden nur einzelne Strahlen im festen Abstand ausgewertet werden. Würde einer der Strahlen unterbrochen, würde bereits eine Detektion erfolgen. Jedoch wird gemäß der 'beweglichen' Auflösung erst eine Detektion erfolgen, wenn Lichtstrahlen in Abständen größer/gleich wie die eingestellte zweite Auflösung unterbrochen werden.

In Weiterbildung der Erfindung ist die erste Auflösung in der Steuer- und Auswerteeinheit einstellbar.

Dadurch ist es möglich, die erste und die zweite Auflösung individuell einzustellen bzw. an eine Anwendung anzupassen.

Auch hier ist die erste Auflösung nicht durch fixierte Lichtstrahlen festgelegt, sondern es handelt sich um eine bewegliche Auflösung, die an allen Stellen des Lichtvorhangs die erforderliche Auflösung aufweist. Gemäß der 'beweglichen' Auflösung wird eine Detektion erst erfolgen, wenn Lichtstrahlen in Abständen größer/gleich wie die eingestellte erste Auflösung unterbrochen werden.

In Weiterbildung der Erfindung ist durch die Steuer- und Auswerteeinheit (8) für den ersten Bereich (10) mit der ersten Auflösung und/oder für den zweiten Bereich (11) mit der zweiten Auflösung bei einem Eingriff in den Bereich ein Warnsignal auf einem nicht sicheren Ausgang ausgebbar.

Der Anwender kann dabei einstellen, ob das Warnsignal nur bei einem Eingriff in den ersten Bereich und/oder in den zweiten Bereich erfolgt. Der Anwender kann das Wamsignal in einer nachfolgenden speicherprogrammierbaren Steuerung auswerten und beispielsweise eine Warnmeldung für die betreffende Person ausgeben oder beispielsweise ein Warnleuchte ansteuern.

In Weiterbildung der Erfindung ist durch die Steuer- und Auswerteeinheit für den ersten Bereich mit der ersten Auflösung bei einem Eingriff in den ersten Bereich ein Wamsignal auf einem nicht sicheren Ausgang ausgebbar.

In Weiterbildung der Erfindung beträgt die erste Auflösung mindestens 14 mm, mindestens 20 mm, mindestens 30 mm oder mindestens 40 mm.

Die Auflösung von 14 mm ist für einen Fingerschutz vorgesehen, wobei bereits ein Eingriff mit einem einzelnen Finger detektiert wird. Eine Auflösung von 20 mm bzw. 30 mm dient der Erkennung eines Eingriffs mit einer Hand. Dabei wird mindestens der flache Handrücken erkannt und detektiert. Mit einer Auflösung von 40 mm wird mindestens ein menschlicher Arm detektiert.

In Weiterbildung der Erfindung beträgt die zweite Auflösung mindestens 20 mm, mindestens 30 mm, mindestens 40 mm oder mindestens 300 mm.

300 mm Auflösung ist beispielsweise für eine Zugangsabsicherung vorgesehen und erfordert nach einer Unterbrechung wieder eine Betätigung einer Reset-Funktion, um einen Wiederanlauf der Maschine zu ermöglichen.

So kann nun beispielsweise die erste Auflösung 14 mm und die zweite Auflösung 30 mm betragen. Bei einem Eingriff in dem ersten Bereich bzw. dem ersten Schutzfeld könnte nun die gefahrbringende Bewegung sofort über das Objektfeststellungssignal gestoppt werden. Verlassen die Finger das Schutzfeld wieder, kann die gefahrbringende Bewegung ohne Wiederanlaufsperre gestartet werden.

Damit kann die erste Auflösung 14 mm und die zweite Auflösung beispielsweise 20 mm, 30 mm, 40 mm oder 300 mm betragen. Die erste Auflösung kann 20 mm und die zweite Auflösung beispielsweise 30mm, 40 mm oder 300 mm betragen. Die erste Auflösung kann 30 mm und die zweite Auflösung beispielweise 40 mm oder 300 mm betragen. Die Auflösungen sind dabei als Mindestauflösungen angegeben, also beispielsweise mindestens 14 mm Auflösung. Die Auflösungen können erreicht werden durch einen Abstand der Lichtsender oder Lichtempfänger zueinander. So kann der Abstand beispielsweise 7 mm betragen, um die oben genannten Mindestauflösungen zu bilden.

Wird der zweite Bereich, bzw. das zweite Schutzfeld mit dem Arm unterbrochen oder durch den Zugang des ganzen Körpers, wird die gefahrbringende Bewegung ebenfalls sofort über das Objektfeststellungssignal gestoppt, jedoch kann die gefahrbringende Bewegung nur wieder mit einer Wiederanlaufsperre gestartet werden.

In Weiterbildung der Erfindung ist damit für wenigstens einen der Bereiche eine Wiederanlaufsperre vorgesehen, so dass für diesen Bereich nach dem Freiwerden des Schutzfeldes ein Anlauf oder ein Restart der Maschine mit einer Resetfunktion von einer Person bestätigt werden muss.

In Weiterbildung der Erfindung muss für den zweiten Bereich mit der zweiten Auflösung nach dem Freiwerden des Schutzfeldes ein Anlauf oder Restart der Maschine mit einer Reset-Funktion von einer Person bestätigt werden.

Dabei wird die Auswertung der Signale der Lichtempfänger und die Auswertung Reset-Funktion in der Steuer- und Auswerteeinheit durchgeführt. Eine Software der Steuer- und Auswerteeinheit ist vom Hersteller erprobt und wird von einem unabhängigen Prüfinstitut zugelassen. Der Anwender kann die integrierte Reset-Funktion nutzen und muss keine externe Anbindung der Reset-Funktion durchführen und für deren sicherheitstechnische Anbindung kümmern.

Weiter kann es auch vorgesehen sein, eine zusätzliche Zeitauswertung zu implementieren. Dabei kann eine kurze Unterbrechung einen Rückschluss auf die Art der Bewegung haben, so dass es sich bei einer kurzen Unterbrechung beispielsweise um ein Reinbeugen der Person handelt und bei einer längeren Unterbrechung des Bereiches sich beispielsweise um ein Eintreten oder Einkriechen handelt.

Die Steuer- und Auswerteeinheit kann beispielsweise unabhängig und außerhalb vom Lichtgittergehäuse angeordnet sein. Die Steuer- und Auswerteeinheit wird beispielsweise von einer sicheren speicherprogrammierbaren Steuerung gebildet. In dieser Steuerung wird die Auswertung beispielsweise über Funktionsbausteine durchgeführt. Das Lichtgitter ist dabei als sicherer Sensor ausgeführt, wobei eine Kommunikation zwischen der Steuer- und Auswerteeinheit und dem Lichtgitter vorgesehen ist. Bei der Kommunikation kann es sich um eine sichere Kommunikation, beispielsweise über eine sichere Schnittstelle, wie beispielsweise einen sicheren Feldbus handeln.

Gemäß einer bevorzugten Ausführungsform ist die Steuer- und Auswerteeinheit gemeinsam mit dem Lichtgitter in einem Gehäuse angeordnet. Dadurch ist das Lichtgitter kompakt und einfach zu handhaben. Das Lichtgitter kann direkt an eine Maschinensteuerung bzw. direkt an eine Maschine angeschlossen werden.

Gemäß einer Ausführungsform sind die Bereiche räumlich unterschiedlich angeordnet.

Beispielsweise sind die Bereiche nebeneinander angeordnet. Die Bereiche können sich jedoch auch überlappen. Die Bereiche können eine identische Größe haben, jedoch werden die Bereiche in der Praxis jeweils unterschiedliche Größen aufweisen, je nach gewünschtem Anwendungsfall.

Gemäß einer Ausführungsform der Erfindung sind die Bereiche räumlich identisch. So kann es beispielsweise vorgesehen sein, dass sich der erste Bereich und der zweite Bereich über das gesamte Lichtgitter erstreckt. Jedoch kann auch nur ein Teil des Schutzfeldes des Lichtgitters einen ersten Bereich aufweisen und einen identischen zweiten Bereich an der gleichen Stelle.

Gemäß einer bevorzugten Ausführungsform werden in der Steuer- und Auswerteeinheit für jeweilige Bereiche mit unterschiedlicher Auflösung jeweils separate Objektfeststellungssignale gebildet.

Hierbei sind dann zwei OSSD-Paare, also zwei redundante Schaltausgänge, vorgesehen, wobei ein erster redundanter Schaltausgang für den ersten Bereich vorgesehen ist und ein zweiter redundanter Schaltausgang für den zweiten Bereich vorgesehen ist.

Der Anwender kann den ersten redundanten Schaltausgang und den zweiten redundanten Schaltausgang für weitere Steuerungsfunktionen frei verwenden. Der Anwender kann selbst bestimmen, welche Funktionen mit den redundanten Schaltausgängen verknüpft werden. Beispielsweise kann vorgesehen sein, für den zweiten redundanten Schaltausgang eine Maschine nur langsamer laufen zu lassen und nicht abzuschalten, wenn ein Objekt in dem zweiten Bereich detektiert wird. Die Maschine wird nur angehalten, wenn ein Objekt in dem ersten Bereich detektiert wird. Da physisch getrennte redundante Schaltausgänge vorhanden sind, können diese einfach mit einer nachgeordneten speicherprogrammierbaren Steuerung verbunden werden.

In Weiterbildung der Erfindung werden in der Steuer- und Auswerteeinheit (8) für jeweilige Bereiche mit unterschiedlicher Auflösung jeweils separate Objektfeststellungssignale (9) gebildet und diese Objektfeststellungssignale über eine Datenschnittstelle, einen Feldbus oder über Ethernet ausgegeben. Dabei handelt es sich auch um sichere Objektfeststellungssignale, die über einen sicheren Feldbus oder eine sicheres Ethernet ausgegeben werden können. Sicherheit bedeutet hier, dass die Informationen sicher im Sinne von Maschinensicherheit übertragen werden. Ein Beispiel für sicheres Ethernet ist EthernetIP.

In Weiterbildung der Erfindung werden die Daten zu jedem einzelnen Strahl sicher an eine externe Steuerung über eine Datenschnittstelle, einen Feldbus oder über Ethernet übertragen. Der Anwender hat dadurch die Möglichkeit, die Daten zu jedem Strahl individuell selbst durch die Steuerung auswerten zu lassen und eigene spezielle Anwendungen frei programmieren. Der Anwender kann dadurch zusätzliche komplexe Funktionen nutzen. Die externe Steuerung ist beispielsweise eine speicherprogrammierbare Steuerung der Anmelderin oder eines Drittanbieters.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

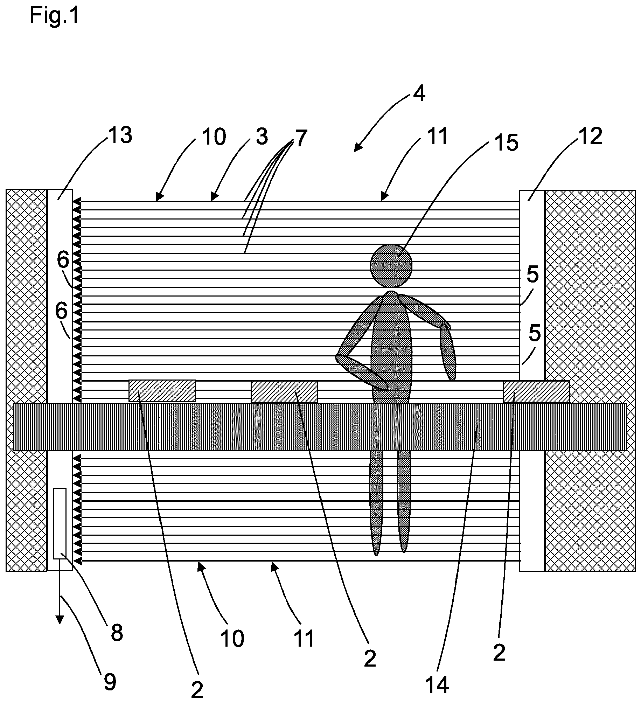

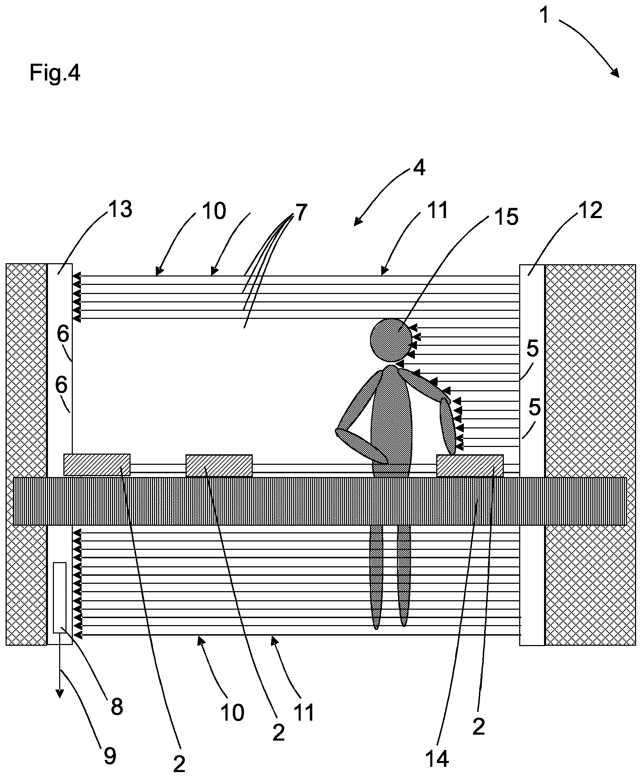

Figur 1 bis 4 ein Lichtgitter gemäß der vorliegenden Erfindung.

In den nachfolgenden Figuren sind identische Teile mit identischen Bezugszeichen versehen.

Figur 1 zeigt ein Lichtgitter 4 zur Erfassung von Objekten 2 und/oder Personen 15 innerhalb eines Überwachungsbereiches 3 oder Schutzfeldes, mit einer Sendeeinheit 12 mit Lichtstrahlen 7 emittierenden Lichtsendern 5, mit einer Empfangseinheit 13 mit Lichtstrahlen 7 empfangenden Lichtempfängem 6, und mit einer Steuer- und Auswerteeinheit 8, in welcher in Abhängigkeit von Empfangssignalen an den Ausgängen von den Lichtempfängern 6 Objektfeststellungssignale 9 generiert werden, wobei die Lichtsender 5 und die Lichtempfänger 6 jeweils äquidistant angeordnet sind, so dass die Lichtsender 5 und Lichtempfänger 6 eine erste Auflösung des Lichtgitters 4 bilden, wobei die erste Auflösung in einem ersten Bereich 10 des Lichtgitters 4 wirksam ist und die Lichtsender 5 und die Lichtempfänger 6 in einem zweiten Bereich 11 des Lichtgitters 4 mit einer zweiten Auflösung durch die Steuer- und Auswerteeinheit 8 einstellbar sind, wobei die zweite Auflösung eine niedrigere Auflösung ist, als die erste Auflösung.

Damit wird ein Lichtgitter 4 bzw. Lichtvorhang gebildet mit zwei unterschiedlichen Auflösungen, wobei ein zeitgleiches Überwachen von zwei unterschiedlichen Auflösungen in einem Lichtgitter 4 erfolgt.

Damit erfolgt durch das Lichtgitter 4 eine Unterscheidung zwischen einem 'Eingriff', nämlich ob nur Körperteile in das Schutzfeld eingreifen und einem ,Zugang', bei dem ein ganzer Körper in das Schutzfeld bzw. den Überwachungsbereich 3 des Lichtgitters 4 hineinragt. Diese Unterscheidung wird erfindungsgemäß durch ein und dasselbe Lichtgitter 4 durchgeführt.

Jeder der Bereiche wird durch eine bestimmte Anzahl von aufeinanderfolgenden Lichtsendern 5 bzw. Lichtempfängern 6 als aufeinanderfolgende Sender-/Empfängerpaare gebildet.

Gemäß Figur 1 bis 4 sind die Bereiche räumlich identisch. Gemäß Figur 1 bis 4 erstreckt sich der erste Bereich 10 und der zweite Bereich 11 über das gesamte Lichtgitter 4.

Das Objektfeststellungssignal 9 wird über Ausgangsschaltelemente ausgegeben. Die Ausgangsschaltelemente sind mit einer Maschinensteuerung verbunden.

Gemäß Figur 1 ist die erste Auflösung in der Steuer- und Auswerteeinheit einstellbar. Gemäß Figur 1 beträgt die erste Auflösung 14 mm. Die Auflösung von 14 mm ist für einen Fingerschutz vorgesehen, wobei bereits ein Eingriff mit einem einzelnen Finger in das Schutzfeld detektiert wird. Der erste Bereich 10 mit der ersten Auflösung ist auf das ganze Schutzfeld ausgedehnt.

Gemäß Figur 1 beträgt die zweite Auflösung 300 mm. 300 mm Auflösung ist für eine Zugangsabsicherung vorgesehen und erfordert nach einer Unterbrechung wieder ein Betätigung einer Reset-Funktion, um einen Wiederanlauf der Maschine zu ermöglichen. Der zweite Bereich 12 mit der zweiten Auflösung erstreckt sich ebenfalls über das gesamte Schutzfeld.

Hinter dem Lichtgitter steht eine Person 15. Diese Person 15 überwacht ein Transportband 14, das vor dem Lichtgitter 4 angeordnet ist und auf dem Objekte 2 transportiert werden.

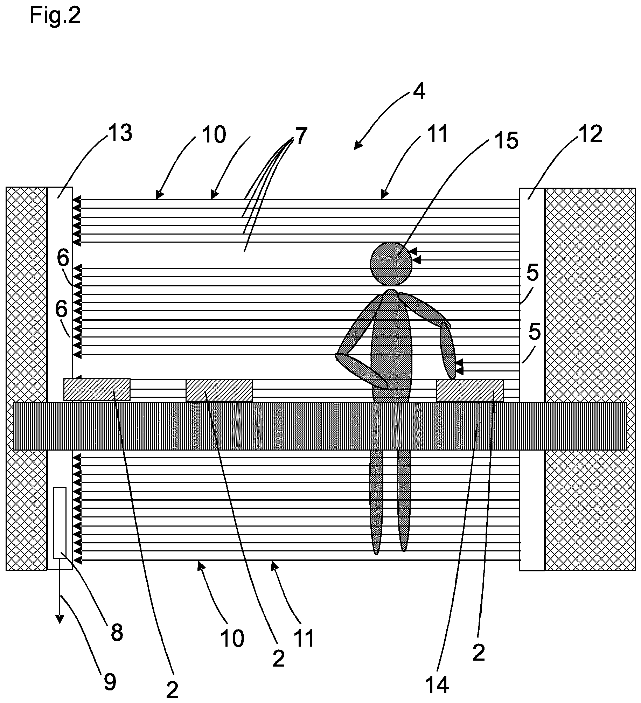

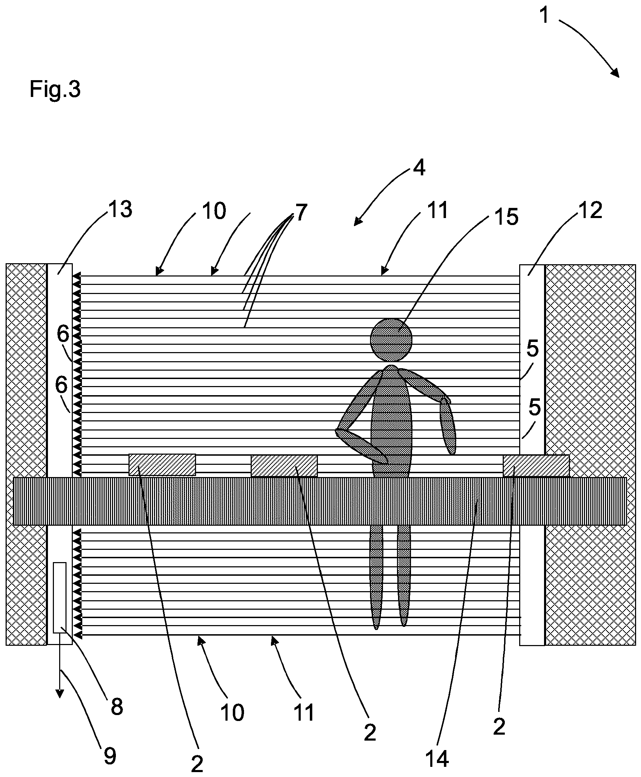

Gemäß Figur 2 erfolgt ein Eingriff in den ersten Bereich teilweise mit dem Kopf und teilweise mit dem linken Arm der Person 15. Dadurch wird das Transportband 14 mit den Objekten 2 durch die Steuer- und Auswerteeinheit 8 gestoppt. Verlässt die Person 15 das Schutzfeld wieder gemäß Figur 3, läuft das Transportband 14 wieder automatisch an.

Gemäß Figur 3 erfolgt ein Eingriff in den zweiten Bereich 11 teilweise mit dem ganzen Oberkörper der Person 15. Dadurch wird das Transportband 14 mit den Objekten 2 gestoppt. Verlässt die Person 15 das Schutzfeld wieder gemäß Figur 3, läuft das Transportband 14 nicht wieder automatisch an.

Wird der zweite Bereich 11, bzw. das zweite Schutzfeld durch den Zugang des ganzen Körpers der Person 15 unterbrochen, wird die gefahrbringende Bewegung ebenfalls sofort über das Objektfeststellungssignal 9 gestoppt, jedoch kann die gefahrbringende Bewegung nur wieder mit einer Betätigung einer Reset-Funktion bzw. Reset-Taste gestartet werden.

Gemäß Figur 3 ist damit für den zweiten Bereich 11 eine Wiederanlaufsperre vorgesehen, so dass für diesen Bereich nach dem Freiwerden des Schutzfeldes ein Anlauf oder ein Restart der Maschine mit einer Reset-Funktion von einer Person 15 bestätigt werden muss.

Weiter kann es auch vorgesehen sein, eine zusätzliche Zeitauswertung zu implementieren. Dabei kann eine kurze Unterbrechung ein Rückschluss auf die Art der Bewegung haben, so dass es sich bei einer kurzen Unterbrechung beispielsweise um ein Reinbeugen der Person 15 handelt und bei einer längeren Unterbrechung des Bereiches sich beispielsweise um ein Eintreten oder Einkriechen handelt.

Die Steuer- und Auswerteeinheit 8 kann beispielsweise unabhängig und außerhalb vom Lichtgittergehäuse angeordnet sein. Die Steuer- und Auswerteeinheit 8 wird beispielsweise von einer sicheren speicherprogrammierbaren Steuerung gebildet. In dieser Steuerung wird die Auswertung beispielsweise über Funktionsbausteine durchgeführt. Das Lichtgitter 4 ist dabei als sicherer Sensor ausgeführt, wobei eine Kommunikation zwischen der Steuer- und Auswerteeinheit und dem Lichtgitter 4 vorgesehen ist. Bei der Kommunikation kann es sich um eine sichere Kommunikation, beispielsweise über eine sichere Schnittstelle, wie beispielsweise einen sicheren Feldbus handeln.

Gemäß Figur 1 bis 4 ist die Steuer- und Auswerteeinheit 8 gemeinsam mit dem Lichtgitter 4 in einem Gehäuse angeordnet. Dadurch ist das Lichtgitter kompakt und einfach zu handhaben. Das Lichtgitter kann direkt an eine Maschinensteuerung bzw. direkt an eine Maschine angeschlossen werden.

Gemäß Figur 1 bis 4 werden in der Steuer- und Auswerteeinheit 8 für jeweilige Bereiche mit unterschiedlicher Auflösung jeweils separate Objektfeststellungssignale 9 gebildet.

Hierbei sind dann zwei OSSD-Paare, also zwei redundante Schaltausgänge, vorgesehen, wobei ein erster redundanter Schaltausgang für den ersten Bereich 10 vorgesehen ist und ein zweiter redundanter Schaltausgang für den zweiten Bereich 11 vorgesehen ist.

### Bezugszeichen:

- 2: Objekte
- 3: Überwachungsbereich
- 4: Lichtgitter
- 5: Lichtsender
- 6: Lichtempfänger
- 7: Lichtstrahlen
- 8: Steuer- und Auswerteeinheit
- 9: Objektfeststellungssignal
- 10: erster Bereich
- 11: zweiter Bereich
- 12: Sendeeinheit
- 13: Empfangseinheit
- 14: Transportband
- 15: Person

## Patentansprüche

1. Lichtgitter (4) zur Erfassung von Objekten (2) und/oder Personen (15) innerhalb eines Überwachungsbereiches (3) oder Schutzfeldes, mit einer Sendeeinheit (12) mit Lichtstrahlen (7) emittierenden Lichtsendern (5), mit einer Empfangseinheit (13) mit Lichtstrahlen (7) empfangenden Lichtempfängern (6) und mit einer Steuer- und Auswerteeinheit (8), in welcher in Abhängigkeit von Empfangssignalen an den Ausgängen von den Lichtempfängern (6) Objektfeststellungssignale (9) generiert werden, wobei die Lichtsender (5) und die Lichtempfänger (6) jeweils äquidistant angeordnet sind, wobei die Lichtsender (5) und Lichtempfänger (6) eine erste Auflösung des Lichtgitters (4) bilden,
wobei
die erste Auflösung in einem ersten Bereich (10) des Lichtgitters (4) wirksam ist und die Lichtsender (5) und die Lichtempfänger (6) in einem zweiten Bereich (11) des Lichtgitters (4) mit einer zweiten Auflösung durch die Steuer- und Auswerteeinheit (8) einstellbar sind, wobei die zweite Auflösung eine niedrigere Auflösung ist, als die erste Auflösung, **dadurch gekennzeichnet, dass** in der Steuer- und Auswerteeinheit (8) für jeweilige Bereiche mit unterschiedlicher Auflösung jeweils separate Objektfeststellungssignale (9) gebildet werden und diese Objektfeststellungssignale über eine Datenschnittstelle, einen Feldbus oder über Ethernet ausgebbar sind.

2. Lichtgitter nach Anspruch 1, **dadurch gekennzeichnet, dass** die erste Auflösung in der Steuer- und Auswerteeinheit (8) einstellbar ist.

3. Lichtgitter nach mindestens einem der vorhergehenden Ansprüche, **dadurch gekennzeichnet, dass** in der Steuer- und Auswerteeinheit (8) für den ersten Bereich (10) mit der ersten Auflösung und/oder für den zweiten Bereich (11) mit der zweiten Auflösung bei einem Eingriff in den Bereich ein Warnsignal auf einem nicht sicheren Ausgang ausgebbar ist.

4. Lichtgitter nach mindestens einem der vorhergehenden Ansprüche, **dadurch gekennzeichnet, dass** die erste Auflösung mindestens 14 mm, mindestens 20 mm, mindestens 30 mm oder mindestens 40 mm beträgt, wobei die erste Auflösung eine höhere Auflösung ist als die zweite Auflösung.

5. Lichtgitter nach mindestens einem der vorhergehenden Ansprüche, **dadurch gekennzeichnet, dass** die zweite Auflösung mindestens 20 mm, mindestens 30 mm, mindestens 40 mm oder mindestens 300 mm beträgt, wobei die zweite Auflösung eine niedrigere Auflösung ist als die erste Auflösung.

6. Lichtgitter nach mindestens einem der vorhergehenden Ansprüche, **dadurch gekennzeichnet, dass** für wenigstens einen der Bereiche (10, 11) eine Wiederanlaufsperre vorgesehen ist, so dass für diesen Bereich nach dem Freiwerden des Schutzfeldes ein Anlauf oder Restart der Maschine mit einer Reset-Funktion von einer Person (15) bestätigt werden muss.

7. Lichtgitter nach mindestens einem der vorhergehenden Ansprüche, **dadurch gekennzeichnet, dass** für den zweiten Bereich (11) mit der zweiten Auflösung nach dem Freiwerden des Schutzfeldes ein Anlauf oder Restart der Maschine mit einer Reset-Funktion von einer Person bestätigt werden muss.

8. Lichtgitter nach mindestens einem der vorhergehenden Ansprüche, **dadurch gekennzeichnet, dass** die Steuer- und Auswerteeinheit (8) gemeinsam mit dem Lichtgitter (4) in einem Gehäuse angeordnet ist.

9. Lichtgitter nach mindestens einem der vorhergehenden Ansprüche, **dadurch gekennzeichnet, dass** die Bereiche (10, 11) räumlich unterschiedlich sind.

10. Lichtgitter nach mindestens einem der vorhergehenden Ansprüche 1 bis 6, **dadurch gekennzeichnet, dass** die Bereiche (10, 11) räumlich identisch sind.

11. Lichtgitter nach mindestens einem der vorhergehenden Ansprüche, **dadurch gekennzeichnet, dass** in der Steuer- und Auswerteeinheit (8) für jeweilige Bereiche mit unterschiedlicher Auflösung jeweils separate Objektfeststellungssignale (9) gebildet werden durch zwei redundante Schaltausgänge, wobei ein erster redundanter Schaltausgang für den ersten Bereich vorgesehen ist und ein zweiter redundanter Schaltausgang für den zweiten Bereich vorgesehen ist.

## Claims

1. A light grid (4) for detecting objects (2) and/or persons (15) within a monitored zone (3) or within a protected field, having a transmission unit (12) with light transmitters (5) emitting light beams (7), having a reception unit (13) with light receivers (6) receiving light beams (7), and having a control and evaluation unit (8) in which object determination signals (9) are generated in dependence on received signals at the outputs of the light receivers (6), wherein the light transmitters (5) and the light receivers (6) are each arranged equidistantly, with the light transmitters (5) and the light receivers (6) forming a first resolution of the light grid (4),
wherein
the first resolution is active in a first zone (10) of the light grid (4) and the light transmitters (5) and the light receivers (6) in a second zone (11) of the light grid (4) having a second resolution can be set by the control and evaluation unit (8), with the second resolution being a lower resolution than the first resolution, **characterized in that** respective object determination signals (9) are formed in the control and evaluation unit (8) for respective zones having different resolutions and said object determination signals can be output via a data interface, a fieldbus, or over Ethernet.

2. A light grid in accordance with claim 1, **characterized in that** the first resolution is settable in the control and evaluation unit (8).

3. A light grid in accordance with at least one of the preceding claims, **characterized in that** a warning signal can be output at a non-safe output in the control and evaluation unit (8) for the first zone (10) having the first resolution and/or for the second zone (11) having the second resolution on an intrusion into the zone.

4. A light grid in accordance with at least one of the preceding claims, **characterized in that** the first resolution amounts to at least 14 mm, at least 20 mm, at least 30 mm, or at least 40 mm, with the first resolution being a higher resolution than the second resolution.

5. A light grid in accordance with at least one of the preceding claims, **characterized in that** the second resolution amounts to at least 20 mm, at least 30 mm, at least 40 mm, or at least 300 mm, with the second resolution being a lower resolution than the first resolution.

6. A light grid in accordance with at least one of the preceding claims, **characterized in that** a restart block is provided for at least one of the zones (10, 11) so that a start or restart of the machine has to be confirmed by a person (15) by a reset function for this zone after the protected field becomes free.

7. A light grid in accordance with at least one of the preceding claims, **characterized in that** a start or restart of the machine has to be confirmed by a person by a reset function for the second zone (11) having the second resolution after the protected field becomes free.

8. A light grid in accordance with at least one of the preceding claims, **characterized in that** the control and evaluation unit (8) is arranged in a housing together with the light grid (4).

9. A light grid in accordance with at least one of the preceding claims, **characterized in that** the zones (10, 11) are spatially different.

10. A light grid in accordance with at least one of the preceding claims 1 to 6, **characterized in that** the zones (10, 11) are spatially identical.

11. A light grid in accordance with at least one of the preceding claims, **characterized in that** respective separate object determination signals (9) are formed by two redundant switch outputs in the control and evaluation unit (8) for respective zones having different resolutions, with a first redundant switch output being provided for the first zone and with a second redundant switch output being provided for the second zone.

## Revendications

1. Grille lumineuse (4) pour détecter des objets (2) et/ou des personnes (15) à l'intérieur d'une zone à surveiller (3) ou d'un champ de protection, comportant une unité d'émission (12) pourvue d'émetteurs de lumière (5) émettant des faisceaux lumineux (7), une unité de réception (13) pourvue de récepteurs de lumière (6) recevant des faisceaux lumineux (7), et une unité de commande et d'évaluation (8) dans laquelle des signaux de constatation d'objet (8) sont générés en fonction de signaux de réception aux sorties des récepteurs de lumière (6), les émetteurs de lumière (5) et les récepteurs de lumière (6) étant disposés chacun de façon équidistante, les émetteurs de lumière (5) et les récepteurs de lumière (6) formant une première résolution de la grille lumineuse (4),
dans laquelle
la première résolution est efficace dans une première zone (10) de la grille lumineuse (4), et les émetteurs de lumière (5) et les récepteurs de lumière (6) sont susceptibles d'être réglés par l'unité de commande et d'évaluation (8) dans une seconde zone (11) de la grille lumineuse (4) ayant une seconde résolution, la seconde résolution étant une résolution inférieure à la première résolution,
**caractérisée en ce que**
dans l'unité de commande et d'évaluation (8), des signaux de constatation d'objet (9) respectifs séparés sont formés pour des zones respectives ayant différentes résolutions, et ces signaux de constatation d'objet peuvent être émis via une interface de données, un bus de terrain ou par Ethernet.

2. Grille lumineuse selon la revendication 1, **caractérisée en ce que** la première résolution est susceptible d'être réglée dans l'unité de commande et d'évaluation (8).

3. Grille lumineuse selon l'une au moins des revendications précédentes, **caractérisée en ce que** lors d'une intervention dans la zone, un signal d'alerte peut être émis sur une sortie non sécurisée pour la première zone (10) ayant la première résolution et/ou pour la seconde zone (11) ayant la seconde résolution, dans l'unité de commande et d'évaluation (8).

4. Grille lumineuse selon l'une au moins des revendications précédentes, **caractérisée en ce que** la première résolution est d'au moins 14 mm, d'au moins 20 mm, d'au moins 30 mm ou d'au moins 40 mm, la première résolution étant une résolution supérieure à la seconde résolution.

5. Grille lumineuse selon l'une au moins des revendications précédentes, **caractérisée en ce que** la seconde résolution est d'au moins 20 mm, d'au moins 30 mm, d'au moins 40 mm ou d'au moins 300 mm, la seconde résolution étant une résolution inférieure à la première résolution.

6. Grille lumineuse selon l'une au moins des revendications précédentes, **caractérisée en ce qu'**un blocage du redémarrage est prévu pour l'une au moins desdites zones (10, 11), de sorte qu'un démarrage ou un redémarrage de la machine avec fonction de réinitialisation doit être confirmé par une personne (15) pour cette zone, après que le champ de protection est devenu libre.

7. Grille lumineuse selon l'une au moins des revendications précédentes, **caractérisée en ce qu'**un démarrage ou un redémarrage de la machine avec fonction de réinitialisation doit être confirmé par une personne pour la seconde zone (11) ayant la seconde résolution, après que le champ de protection est devenu libre.

8. Grille lumineuse selon l'une au moins des revendications précédentes, **caractérisée en ce que** l'unité de commande et d'évaluation (8) est disposée conjointement avec la grille lumineuse (4) dans un boîtier.

9. Grille lumineuse selon l'une au moins des revendications précédentes, **caractérisée en ce que** les zones (10, 11) sont spatialement différentes.

10. Grille lumineuse selon l'une au moins des revendications précédentes 1 à 6, **caractérisée en ce que** les zones (10, 11) sont spatialement identiques.

11. Grille lumineuse selon l'une au moins des revendications précédentes, **caractérisée en ce que** des signaux de constatation d'objet (9) respectifs séparés sont formés dans l'unité de commande et d'évaluation (8) pour des zones respectives ayant différentes résolutions par deux sorties de commutation redondantes, une première sortie de commutation redondante étant prévue pour la première zone, et une seconde sortie de commutation redondante étant prévue pour la seconde zone.
